# EUROPÄISCHE PATENTSCHRIFT

(11) **EP 0 907 425 B1**
(45) Veröffentlichungstag und Bekanntmachung des Hinweises auf die Patenterteilung: **08.01.2003**
(21) Anmeldenummer: 97908281.5
(22) Anmeldetag: 21.03.1997
(51) Int. Cl.: B05D 7/14, C09D 175/06

(54) **VERFAHREN ZUR HERSTELLUNG VON AUTOMOBILKAROSSERIETEILEN UND AUTOMOBILKAROSSERIEN**
PROCESS FOR PRODUCING VEHICLE COACHWORK COMPONENTS AND VEHICLE COACHWORK
PROCEDE DE FABRICATION DE COMPOSANTS DE CARROSSERIE AUTOMOBILE ET CARROSSERIES FORMEES DE CES COMPOSANTS

(30) Priorität: 30.03.1996 DE 19612898
(43) Veröffentlichungstag der Anmeldung: 14.04.1999
(73) Patentinhaber: E.I. DU PONT DE NEMOURS AND COMPANY, Wilmington Delaware 19898 (US)
(72) Erfinder: SHAFIK, Ahmed, D-42369 Wuppertal (DE); FRITZ, Pamela, D-40699 Erkrath (DE); HANSKE, Silke, D-42279 Wuppertal (DE)
(74) Vertreter: Hrabal, Ulrich, Dr.
(86) Internationale Anmeldenummer: EP9701440
(87) Internationale Veröffentlichungsnummer: WO97036694

(56) Entgegenhaltungen:
- EP-A- 0 438 773
- WO-A-89/11497
- US-A- 4 169 825

## Beschreibung

Die Erfindung betrifft ein Verfahren zur Herstellung zweischichtlackierter Automobilteile, bei dem auf ein Coil aus Metallblech beidseitig zwei Überzugsschichten aufgebracht und jeweils eingebrannt werden, aus dem Coil anschließend entsprechende Blechteile ausgestanzt und im Tiefziehverfahren verformt werden, das dadurch gekennzeichnet ist, daß jeweils im Coil-Coating-Verfahren zur Herstellung der ersten Überzugsschicht ein Überzugsmittel (A) aufgebracht wird, das bezogen auf seine Festharzzusammensetzung 55 bis 80 Gew.-% eines oder mehrerer Polyesterpolyole, 2 bis 10 Gew.-% eines oder mehrerer aromatischer Epoxidharze sowie als Vernetzer 5 bis 15 Gew.-% Aminoplastharz und 10 bis 25 Gew.-% blockiertes Polyisocyanat enthält, und zur Herstellung der zweiten Überzugsschicht ein Überzugsmittel (B) aufgebracht wird, das bezogen auf seine Festharzzusammensetzung 60 bis 80 Gew.-% eines oder mehrerer Polyesterpolyole sowie als Vernetzer 10 bis 20 Gew.-% Aminoplastharz und 10 bis 20 Gew.-% blockiertes Polyisocyanat enthält, wobei die Summe der Bestandteile der Überzugsmittel jeweils 100 Gew.-% ergibt, und ein Verfahren zur Herstellung von Automobilkarosserien.

Stand der Technik bei der Lackierung von Kraftfahrzeugen oder deren Teilen ist zunächst die Herstellung der Karosserie oder der Karosserieteile. Dazu werden zunächst entsprechend geformte Blechteile ausgestanzt und unter Verwendung von Ziehfett oder -öl im Tiefziehverfahren verformt, dann im allgemeinen durch Schweißen zusammengebaut und anschließend aufwendig gereinigt. Anschließend erfolgt die Aufbringung einer Lackschicht durch Elektrotauchlackierung und falls gewünscht die Aufbringung einer oder insbesondere im Falle von Automobilkarosserien mehrerer weiterer Lackschichten.

Es besteht der Wunsch, ein einfacheres Herstellungsverfahren zu finden, das insbesondere die Reinigungsschritte vermeidet und es erlaubt, die Elektrotauchlackierung zu ersetzen.

Aus der europäischen Patentanmeldung EP-A-0 603 772 ist ein Verfahren zur Herstellung von Fahrzeugteilen aus vorlackierten Blechen bekannt. Die mit einer Grundierung vorlackierten Bleche werden in Abschnitte geschnitten, diese werden tiefgezogen und mit einem Pulverlack als Decklackierung beschichtet. Die zur Herstellung der Grundierung und der Decklackierung verwendeten Lacke werden nicht näher beschrieben.

Aus der europäischen Patentanmeldung EP-A-0 438 773 ist ein Verfahren zur Herstellung von Kraftfahrzeugkarosserien bekannt, bei dem mit einer mindestens zweischichtigen Lackierung vorbeschichtete Bleche tiefgezogen und anschließend zusammengebaut werden. Als Grundierung wird ein Acrylatlack und als Decklack wird ein Polyurethanlack eingesetzt. Die Zusammensetzung dieser Lacke ist nicht näher erläutert.

Die WO 89/11497 beschreibt ein im Coil Coating-Verfahren applizierbares Überzugsmittel, das geeignet ist, tiefziehfähige Einschichtlackierungen auf Blech aufzubringen. Nach dem Ausstanzen entsprechend geformter Bleche können die so einschichtlackierten Teile im Tiefziehverfahren verformt werden, ohne daß die Lackschicht Beschädigungen aufweist. Die Überzugsmittel aus WO 89/11497 enthalten ein Polyesterpolyol mit kontrolliertem Verzweigungsgrad und einem gewichtsmittleren Molekulargewicht von 4000 bis 40000 und einer Hydroxylzahl von 10 bis 100 mg kOH/g als Bindemittel, welches über freies oder blockiertes Polyisocyanat vernetzt wird.

Die unter Verwendung der Überzugsmittel aus WO 89/11497 im Coil Coating-Verfahren hergestellten Beschichtungen sind verbesserungsbedürftig hinsichtlich ihrer Tiefziehfähigkeit. Dies hat sich im Falle einer beidseitigen Coil Coating-Applikation gezeigt, wobei die auf die spätere Innenseite des verformten Teils aufgebrachte Überzugsschicht dem dort besonders extrem wirkenden Verformungsprozeß nicht standhält. Dies zeigt sich beispielsweise in der Simulation des Tiefziehvorgangs, bei dem aus einem beidseitig im Coil Coating-Verfahren beschichteten Blech ein quadratisches Näpfchen mit abgerundeten Ecken hergestellt wird. Die Beschichtung im Bereich der Ecken auf der Innenseite des Näpfchens zeigt Risse oder sogar Abplatzungen, insbesondere wenn Bleche mit einer Stärke im Bereich von 0,7 bis 1,3 mm eingesetzt werden, wie sie im Automobilkarossenbau üblich sind. Weiterhin haften die im Coil Coating-Verfahren aufgebrachten und tiefgezogenen Einschichtlackierungen nicht auf dem Substrat, wenn weitere in der Autoserienlackierung übliche Lackschichten aufgebracht werden, wie beispielsweise Füller-, Basislack- und Klarlackschicht. Es hat sich gezeigt, daß sich die Coil Coating-Grundierungsschicht gemeinsam mit den Folgelackschichten vom metallischen Untergrund ablöst, insbesondere im Bereich starker Verformung. Beispielsweise zeigt sich ein Ablösen der Mehrschichtlackierung im Bereich der Ecken und Kanten an der Außenseite des quadratischen Näpfchens, oftmals schon nach dem Einbrennen der Füllerschicht.

Es besteht die Aufgabe, ein Verfahren zur Herstellung lackierter Automobilkarossen und zur Herstellung lackierter Kraftfahrzeugteile bereitzustellen, das die Nachteile des Standes der Technik überwindet. Es soll einerseits den Elektrotauchlackierprozeß ersetzen und eine aufwendige Reinigung vermeiden und andererseits tiefziehfähige Lackierungen liefern, die gut haften und keine Risse zeigen.

Die Aufgabe wird gelöst durch ein Verfahren der eingangs genannten Art, das dadurch gekennzeichnet ist, daß jeweils in Coil-Coating-Verfahren zur Herstellung der ersten Überzugsschicht ein Überzugsmittel (A) aufgebracht wird, das bezogen auf seine Festharzzusammensetzung 55 bis 80 Gew.-% eines oder mehrerer Polyesterpolyole, 2 bis 10 Gew.-% eines oder mehrerer aromatischer Epoxidharze sowie als Vernetzer 5 bis 15 Gew.-% Aminoplastharz und 10 bis 25 Gew.-% blockiertes Polyisocyanat enthält, und zur Herstellung der zweiten Überzugsschicht ein Überzugsmittel (B) aufgebracht wird, das bezogen auf seine Festharzzusammensetzung 60 bis 80 Gew.-% eines oder mehrerer Polyesterpolyole sowie als Vernetzer 10 bis 20 Gew.-% Aminoplastharz und 10 bis 20 Gew.-% blockiertes Polyisocyanat enthält, wobei die Summe der Bestandteile der Überzugsmittel jeweils 100 Gew.-% ergibt.

Die Erfindung betrifft weiterhin ein Verfahren zur Herstellung lackierter Automobilkarosserien, bei dem auf ein Coil aus Metallblech beidseitig zwei Überzugsschichten aufgebracht und jeweils eingebrannt werden, aus dem Coil anschließend Blechteile ausgestanzt, im Tiefziehverfahren verformt und zu einer Automobilkarosserie zusammengefügt werden, das dadurch gekennzeichnet ist, daß jeweils in Coil-Coating-Verfahren zur Herstellung der ersten Überzugsschicht ein Überzugsmittel (A) aufgebracht wird, das bezogen auf seine Festharzzusammensetzung 55 bis 80 Gew.-% eines oder mehrerer Polyesterpolyole, 2 bis 10 Gew.-% eines oder mehrerer aromatischer Epoxidharze sowie als Vernetzer 5 bis 15 Gew.-% Aminoplastharz und 10 bis 25 Gew.-% blockiertes Polyisocyanat enthält, zur Herstellung der zweiten Überzugsschicht ein Überzugsmittel (B) aufgebracht wird, das bezogen auf seine Festharzzusammensetzung 60 bis 80 Gew.-% eines oder mehrerer Polyesterpolyole sowie als Vernetzer 10 bis 20 Gew.-% Aminoplastharz und 10 bis 20 Gew.-% blockiertes Polyisocyanat enthält, wobei die Summe der Bestandteile der Überzugsmittel jeweils 100 Gew.-% ergibt, und die lackierten und verformten Blechteile durch Kleben und/oder Clinchen und/oder Schrauben zusammengefügt werden.

Bei den Metallblechen handelt es sich beispielsweise um Stahlbleche oder Aluminiumbleche, insbesondere um Stahlbleche mit einer für den Karosseriebau typischen Blechstärke von 0,7 bis 1,3 mm. Die Bleche können mit einer dem Korrosionsschutz dienenden Metallschicht versehen, beispielsweise verzinkt und/oder in üblicher Weise vorbehandelt sein, beispielsweise können sie phosphatiert und gegebenenfalls auch passiviert sein.

Die im Überzugsmittel (A) eingesetzten Polyesterpolyole sind im wesentlichen frei von olefinischen Doppelbindungen. Sie besitzen ein gewichtsmittleres Molgewicht von 2000 bis 10000, bevorzugt zwischen 3000 und 7000 und eine Hydroxylzahl von 20 bis 50 mg KOH/g. Ihre Säurezahl liegt unter 5 mg KOH/g, bevorzugt unter 3 mg KOH/g. Sie können linear oder verzweigt aufgebaut sein und es kann sich um Mischungen von linearen und/oder verzweigten Polyesterpolyolen handeln.

Die im Überzugsmittel (B) eingesetzten Polyesterpolyole sind im wesentlichen frei von olefinischen Doppelbindungen. Sie besitzen ein gewichtsmittieres Molgewicht von 5000 bis 25000, bevorzugt zwischen 8000 und 20000 und eine Hydroxylzahl von 20 bis 50 mg KOH/g. Ihre Säurezahl liegt unter 5 mg KOH/g, bevorzugt unter 3 mg KOH/g. Sie können linear oder verzweigt aufgebaut sein und es kann sich um Mischungen von linearen und/oder verzweigten Polyesterpolyolen handeln. Bevorzugt handelt es sich um linear aufgebaute Polyesterdiole.

Bei den im Überzugsmittel (A) enthaltenen aromatischen Epoxidharzen handelt es sich um epoxidgruppenhaltige aromatische Polyglycidylether oder weniger bevorzugt (wenngleich auch möglich) um davon abgeleitete Epoxidharzester. Die Polyglycidylether gehen primär aus der Reaktion von Polyphenolen, bevorzugt Diphenolen und insbesondere mehrkernigen Diphenolen mit Epichlorhydrin hervor. Die Polyglycidylether können auch aliphatische Anteile enthalten. Bevorzugt basieren sie jedoch ausschließlich auf Diphenolen. Die Esterderivate der Polyglycidylether werden gebildet durch partielle oder vollständige Umsetzung der Epoxidgruppen mit anorganischen oder organischen Säuren beispielsweise Phosphorsäure oder Carbonsäuren. Bevorzugt ist eine nur partielle Umsetzung, so daß die Epoxidharzester noch Epoxidgruppen enthalten. Im Überzugsmittel (A) werden bevorzugt solche aromatischen Epoxidharze einzeln oder im Gemisch eingesetzt, daß ihr Epoxid-Äquivalentgewicht oder das der Mischung zwischen 180 und 1000 liegt. Besonders bevorzugte Beispiele für die im Überzugsmittel (A) einzeln oder im Gemisch einsetzbaren aromatischen Epoxidharze sind die üblichen käuflichen Epoxidharze, die primär aus der Reaktion von Diphenylolpropan (Bisphenol A) mit Epichlorhydrin hervorgehen und deren Epoxid-Äquivalentgewicht oder das der Mischung zwischen 180 und 1000 liegt.

Als Aminoplastharze, die in den Überzugsmittel (A) und (B) enthalten sind, können die auf dem Lacksektor als Vernetzungsmittel üblichen Aminoplastharze verwendet werden. Zu geeigneten Aminoplastharzen zählen beispielsweise alkylierte Kondensate, die durch Umsetzung von Aminotriazinen oder Amidotriazinen mit Aldehyden hergestellt werden. Zu deren Herstellung werden nach bekannten technischen Verfahren Amino- oder Amidogruppen tragende Verbindungen wie Melamin, Benzoguanamin, Dicyandiamid, Harnstoff, N,N'-Ethylenharnstoff in Gegenwart von Alkoholen wie Methyl-, Ethyl-, Propyl-, iso-Butyl-, n-Butyl- und Hexylalkohol mit Aldehyden, insbesondere Formaldehyd, kondensiert. Es kann sich um teilweise oder vollständig veretherte Kondensate handeln.

Die Aminoplastharze können Modifizierungen aufweisen.

Solche Kondensate sind beispielsweise beschrieben in Ullmann "Encyclopedia of Industrial Chemistry", 5. Auflage, Vol. A2, Kapitel "Aminoresins", Seiten 115 - 141 (1985) und Houben-Weyl, "Methoden der Organischen Chemie", Band 14/2, Seiten 319-388 (1962).

In den Überzugsmitteln (A) und (B) sind blockierte Polyisocyanate enthalten. Als verkappte Isocyanate können beliebige Di- und/oder Polyisocyanate verwendet werden, bei denen die Isocyanatgruppen mit einer Verbindung umgesetzt worden sind, die aktiven Wasserstoff enthält. Blockierte Di- und/oder Polyisocyanate werden z.B. dadurch hergestellt, daß man ein multifunktionelles Isocyanat mindestens mit einer stöchiometrischen Menge an einer monofunktionellen, aktiven Wasserstoff (Zerewitinoff-Reaktion) enthaltenden Verbindung umsetzt. Beispiele für Polyisocyanate sind aromatische, araliphatische und (cyclo)aliphatische Diisocyanate, wie beispielsweise Hexamethylendiisocyanat, Trimethylhexandiisocyanat, Cyclohexan-1,3 und 1,4-diisocyanat, sowie beliebige Gemische dieser Isomeren, Methylcyclohexandiisocyanat, m- oder p-Tetramethylxylylendiisocyanat, Isophorondiisocyanat, Perhydro-2,4'- und/oder -4,4'-diphenylmethandiisocyanat, 1,3- und 1,4-Phenylendiisocyanat, 2,4- und 2,6-Toluylendiisocyanat sowie beliebige Gemische dieser Isomeren, Xylylendiisocyanat, Diphenylmethan-2,4'- und/oder -4,4'-diisocyanat, 3,2'- und/oder 3,4'-Diisocyanato-4-methyldiphenylmethan, sowie von Diisocyanaten abgeleitete Oligomere. Beispiele für derartige Oligomere sind durch Di- oder Trimerisierung gebildete Polyisocyanate sowie Umsetzungsprodukte von stöchiometrisch überschüssigem Diisocyanat mit Wasser, Aminen oder Polyolen. Derartige Polyisocyanate enthalten Uretdion-, Isocyanurat-, Biuret-, Allophanat-, Harnstoff- und/oder Urethangruppen. Außer diesen niedermolekularen Polyisocyanaten können auch die in der Polyurethanchemie bekannten höhermolekularen Isocyanat-Polymere auf Basis urethangruppenfreier Polyisocyanate und höhermolekularer Polyhydroxyverbindungen als Polyisocyanatkomponente eingesetzt werden. Im Rahmen der vorliegenden Erfindung sind von aliphatischen Diisocyanaten, beispielsweise vom Hexamethylendiisocyanat, abgeleitete Polyisocyanate bevorzugt.

Mittel, die die Isocyanate blockieren, enthalten nur eine einzige Amin-, Amid-, Imid-, Lactam-, Thio-, Hydroxyl- oder CH-acide Gruppe. Im allgemeinen werden flüchtige, aktiven Wasserstoff enthaltende Verbindungen mit niedrigen Molmassen verwendet, wie z.B. Alkohole, wie n-Butanol, Isopropanol, tert.-Butanol, Furfurol, 2-Ethylhexanol, Phenole, Kresole, Dialkylaminoalkohole wie Dimethylaminoethanol, Oxime wie Methylethylketoxim, Acetonoxim, Lactame wie epsilon-Caprolactam oder Pyrrolidon-2, Imide wie Phthalimid, Hydroxyalkylester, Hydroxamsäuren und deren Ester, N-Alkylamide wie Methylacetamid, Imidazole wie 2-Methylimidazol, beta-Diketone, wie Acetylaceton, Malonsäuredialkylester oder Acetessigsäurealkylester.

Die Überzugsmittel (A) und/oder (B) können ein oder mehrere blockierte Polyisocyanate enthalten. Zur Blockierung können auch mehr als eine Art von Schutzgruppe, beispielsweise solche mit unterschiedlicher Reaktivität, verwendet werden. Beispielsweise ist es möglich, ein Gemisch von zwei oder mehreren unterschiedlich blockierten Polyisocyanaten zu verwenden oder ein Polyisocyanat einzusetzen, das intramolekular mit zwei oder mehreren unterschiedlichen Schutzgruppen blockiert ist.

Die Polyesterpolyole, die aromatischen Epoxidharze, die Aminoplastharze und die blockierten Polyisocyanate ergeben zusammen den Harzfestkörper im Überzugsmittel (A). Der Harzfestkörper kann in kleinen Anteilen von bis zu 20 Gew.-%, bevorzugt unter 10 Gew.-% durch andere zusätzliche Harze und/oder Vernetzer ausgemacht werden.

Die Polyesterpolyole, die Aminoplastharze und die blockierten Polyisocyanate ergeben zusammen den Harzfestkörper im Überzugsmittel (B). Der Harzfestkörper kann in kleinen Anteilen von bis zu 20 Gew.-%, bevorzugt unter 10 Gew.-% durch andere zusätzliche Harze und/oder Vernetzer ausgemacht werden.

Die Überzugsmittel (A) und (B) enthalten Pigmente und bevorzugt auch Füllstoffe in einem Pigment- plus Füllstoff/Harzfestkörper-Verhältnis von 0,4 : 1 bis 1,3 : 1, bevorzugt unter 1 : 1. Bevorzugt ist das Pigment- plus Füllstoff/Harzfestkörper-Verhältnis im Überzugsmittel (B) größer als im Überzugsmittel (A). Beispiele für Pigmente und Füllstoffe sind übliche anorganische und/oder organische Farbpigmente und/oder Füllstoffe, wie Titandioxid, mikronisiertes Titandioxid, Eisenoxidpigmente, Ruß, Siliciumdioxid, Bariumsulfat, mikronisierter Glimmer, Talkum, Kaolin, Korrosionsschutzpigmente wie z.B. Zinkphosphat, Azopigmente, Phthalocyaninpigmente, Chinacridon- oder Pyrrolopyrrolpigmente. Bevorzugt sind in den Überzugsmitteln (A) und (B) nur unbunte Pigmente enthalten.

Die Überzugsmittel (A) und (B) enthalten lackübliche Additive, wie z.B. Entschäumer, Katalysatoren, Verlaufsmittel, Lichtschutzmittel, Netzmittel, Rheologiesteuerer und Gleitmittel.

Bevorzugt enthält das Überzugsmittel (B) Gleitmittel, wie z.B. Wachse. Beispiele für besonders geeignete Wachse sind Wollwachs, Carnaubawachs, Montanwachs sowie Polyolefinwachs, beispielsweise Polyethylenwachs, sowie Kombinationen zweier oder mehrerer dieser Wachse.

Die Überzugsmitttel (A) und (B) weisen Festkörpergehalte von 50 bis 70 Gew.-%, bevorzugt zwischen 55 und 65 Gew.-% auf. Es handelt sich um Lacksysteme auf der Basis organischer Lösemittel. Beispiele sind Glykolether, wie Butoxyethanol, Butoxypropanol, Methoxypropanol; Dialkohole wie Glykole, z.B. Ethylenglykol, Polyethylenglykol; Ether, z.B. Dipropylenglykoldimethylether; Glykoletherester, wie Ethylglykolacetat, Butylglykolacetat, 3-Methoxy-n-butylacetat, Butyldiglykolacetat, Methoxypropylacetat, Ester, wie Butylacetat, Isobutylacetat, Amylacetat, Dimethylglutarat, Dimethyladipat, Ethylethoxypropionat; Ketone, wie Methylethylketon, Methylisobutylketon, Diisobutylketon, Cyclohexanon, Isophoron; aromatische Kohlenwasserstoffe, wie Xylol, Solvesso 100 (eingetragenes Warenzeichen) und aliphatische Kohlenwasserstoffe.

Die Überzugsmittel (A) und (B) werden jeweils im Coil Coating-Verfahren auf das Metallblech aufgewalzt. Zunächst wird das Überzugsmittel (A) in einer Trockenschichtdicke von 3 bis 15 µm, bevorzugt zwischen 5 und 10 µm aufgebracht und 30 bis 60 Sekunden in einem 300 bis 370°C heißen Konvektionsofen eingebrannt, wobei maximale Objekttemperaturen (PMT, peak metal temperature) zwischen 200 und 250°C erreicht werden. Anschließend wird das Überzugsmittel (B) in einer Trockenschichtdicke von 10 bis 30 µm, bevorzugt zwischen 15 und 25 µm aufgebracht und 30 bis 60 Sekunden in einem 320 bis 380°C heißen Konvektinsofen eingebrannt, wobei maximale Objekttemperaturen (PMT) zwischen 220 und 260°C erreicht werden.

Aus dem beidseitig mit einer Zweischichtlackierung versehenen Metallcoil werden nun in üblicher Weise Blechteile mit der gewünschten Form ausgestanzt und anschließend im Tiefziehverfahren verformt. Im Labor kann dieser Vorgang simuliert werden, indem eine Ronde ausgestanzt und zu einem quadratischen Näpfchen mit abgerundeten Ecken tiefgezogen wird, beispielsweise mittels der von der Firma Erichsen vertriebenen Tiefzieh-Näpfchen-Prüfmaschine, Original ERICHSEN, Modell 224/II. In der Praxis können lackierte Automobilteile, wie z.B. Automobilkleinteile oder -karosserieteile wie z.B. Kotflügel, Motorhauben, Kofferdeckel, etc. erhalten werden, deren Lackierung beidseitig keinerlei Risse oder Abplatzungen aufweist. Falls gewünscht können weitere übliche Lackschichten beispielsweise im Spritzverfahren aufgebracht werden oder es können lackierte Automobilkarossen nach dem erfindungsgemäßen Verfahren hergestellt werden.

Dazu werden die verformten Teile zu einer Karosse zusammengefügt. Beispiele für geeignete Fügetechniken sind Kleben und/oder Clinchen und/oder Schrauben, wobei Kleben und/oder Clinchen bevorzugt sind. Nach dem Zusammenfügen werden dann ein oder mehrere weitere Lackschichten im Spritzverfahren aufgebracht. Beispielsweise kann zunächst eine Füllerschicht aufgebracht und eingebrannt werden, bevor eine farb- und/oder effektgebende ein- oder zweischichtige Decklackierung aufgespritzt und eingebrannt wird oder es wird nur eine Klarlackschicht oder eine füllerfreie Decklackierung aufgebracht. Die Decklackierung kann aus einem Einschichtdecklack oder bevorzugt als Basislack/Klarlack-Zweischichtlackierung aufgebracht werden.

Das erfindungsgemäße Verfahren erlaubt die Herstellung lackierter Automobilteile oder -karossen ohne aufwendige Reinigungsprozesse. Ein Elektrotauchlackierprozeß entfällt. Die Coil Coating-Zweischichtlackierung übersteht die Belastung der Einbrennprozesse von nachfolgend aufgebrachten Lackschichten unbeschadet und haftet einwandfrei.

### Beispiel (Herstellung eines mehrschichtlackierten Näpfchens):

### Herstellung des Überzugsmittels (A):

0,4 Teile Siliziumdioxid, 0,5 Teile Ruß, 0,1 Teile Titandioxid, 1,0 Teile Talkum, 9,0 Teile Bariumsulfat und 9,0 Teile Zinkphosphat werden in einer Mischung aus 14,0 Teilen einer 60 gew.-%igen Lösung eines Polyesterdiols (Hydroxylzahl 25 mg KOH/g, Mw 5000) in Solvesso 150 (Gemisch aromatischer Kohlenwasserstoffe mit einem Siedebereich von 182 bis 202°C), 6,0 Teilen einer 60 gew.-%igen Lösung eines Polyesterpolyols (Hydroxylzahl 35 mg KOH/g, Mw 4000) in einer 3 : 1-Mischung aus Solvesso 150 und Butoxyethanol, 8,0 Teilen eines handelsüblichen Gemischs von Dicarbonsäuredimethylestern (21 % Dimethyladipat, 56 % Dimethylglutarat, 23 % Dimethylsuccinat) und 1,7 Teilen Solvesso 100 (Gemisch aromatischer Kohlenwasserstoffe mit einem Siedebereich von 155 bis 185°C) angerieben. Nach Zugabe von 0,8 Teilen eines handelsüblichen Verlaufsmittels, 1,0 Teilen Dibutylzinndilaurat wird mit 22,5 Teilen der Lösung des Polyesterpolyols, 8,4 Teilen eines mit Butanonoxim blockierten Polyisocyanats auf Basis Hexamethylendiisocyanat (75 gew.-%ig, NCO-Gehalt, blockiert, ca. 11,1 %), 4,4 Teilen einer 92 gew.-%igen ethanolischen Lösung eines Styrol/Allylalkohol-Copolymer-modifizierten Melaminharzes vom Hexamethoxymethylmelamin-Typ, 2,2 Teilen einer 75 gew.-%igen xylolischen Lösung eines Bisphenol-A-Epoxidharzes (Epoxidequivalentgewicht 485) und 11 Teilen Solvesso 100 komplettiert.

### Herstellung des Überzugsmittels (B):

0,7 Teile Siliziumdioxid, 0,5 Teile Ruß, 0,2 Teile Titandioxid, 1,2 Teile Talkum und 22,5 Teile Bariumsulfat werden in einer Mischung aus 17,4 Teilen einer 60 gew.-%igen Lösung eines Polyesterdiols (Hydroxylzahl 25 mg KOH/g, Mw 10000) in einer 4 : 1-Mischung von Solvesso 100 und Methoxypropylacetat, 2,3 Teilen Ethylethoxypropionat, 1,5 Teilen Solvesso 150, 2,7 Teilen eines handelsüblichen Dispergieradditivs und 1,0 Teilen eines handelsüblichen Verlaufsmittels angerieben. Nach Zusatz von 0,7 Teilen einer amingeblockten Sulfonsäure, 0,4 Teilen Wollwachs und 0,8 Teilen Polyethylenwachs wird mit 1,0 Teilen Methoxypropylacetat, 3,2 Teilen Propylencarbonat, 7,0 Teilen Ethylethoxypropionat, 8,4 Teilen Solvesso 150, 16,6 Teilen der Lösung des Polyesterdiols, 5,2 Teilen Hexamethoxymethylmelamin, 1,1 Teilen eines Bisphenol-A-Epoxidharzes (Epoxidequivalentgewicht 185) und 5,6 Teilen des blockierten Polyisocyanats aus dem Überzugsmittel (A) komplettiert.

Ein verzinktes und phosphatiertes, 0,8 mm dickes Stahlblech wird mit dem Überzugsmittel (A) in einer Trockenschichtdicke von 7 µm durch Walzauftrag beschichtet und in einem 345°C heißen Trockenofen 40 Sekunden eingebrannt. Dabei erreicht das Stahlblech eine maximale PMT von 216°C. Nach dem Abkühlen wird das Überzugsmittel (B) in einer Trockenschichtdicke von 18 µm ebenfalls durch Walzauftrag aufgebracht und in einem 345°C heißen Trockenofen 50 Sekunden eingebrannt. Dabei erreicht das Stahlblech eine PMT von 226°C. Nach dem Abkühlen werden Ronden mit einem Durchmesser von 8,5 cm ausgestanzt. Die Ronden werden im einen Fall von der beschichteten Seite, im anderen Fall von der unbeschichteten Seite her mit der Tiefzieh-Näpfchen-Prüfmaschine, Original ERICHSEN, Modell 224/II zu einem quadratischen Näpfchen von 40 mm mal 40 mm tiefgezogen. Sowohl im Fall des innen wie des außen beschichteten Näpfchens weist die Beschichtung keinerlei Beschädigung auf. Anschließend werden die Näpfchen mit handelsüblichem Füller in einer Trockenschichtdicke von 35 µm durch Spritzen beschichtet und 20 Minuten bei 150°C eingebrannt. Es werden ein Basislack in einer Trockenschichtdicke von 18 µm und ein Acryl/Melaminharz-Klarlack in einer Trockenschichtdicke von 40 µm im Naß-in-Naß-Verfahren aufgespritzt und 30 Minuten bei 130°C eingebrannt. Die Lackierung haftet einwandfrei und weist auch sonst keinerlei Beschädigung auf.

## Patentansprüche

1. Verfahren zur Herstellung zweischichtlackierter Automobilteile, bei dem auf ein Coil aus Metallblech beidseitig zwei Überzugsschichten aufgebracht und jeweils eingebrannt werden, aus dem Coil anschließend entsprechende Blechteile ausgestanzt und im Tiefziehverfahren verformt werden, **dadurch gekennzeichnet, daß** jeweils im Coil-Coating-Verfahren zur Herstellung der ersten Überzugsschicht ein Überzugsmittel (A) aufgebracht wird, das bezogen auf seine Festharzzusammensetzung 55 bis 80 Gew.-% eines oder mehrerer Polyesterpolyole, 2 bis 10 Gew.-% eines oder mehrerer aromatischer Epoxidharze sowie als Vernetzer 5 bis 15 Gew.-% Aminoplastharz und 10 bis 25 Gew.-% blockiertes Polyisocyanat enthält, und zur Herstellung der zweiten Überzugsschicht ein Überzugsmittel (B) aufgebracht wird, das bezogen auf seine Festharzzusammensetzung 60 bis 80 Gew.-% eines oder mehrerer Polyesterpolyole sowie als Vernetzer 10 bis 20 Gew.-% Aminoplastharz und 10 bis 20 Gew.-% blockiertes Polyisocyanat enthält, wobei die Summe der Bestandteile der Überzugsmittel jeweils 100 Gew.-% ergibt.

2. Verfahren zur Herstellung lackierter Automobilkarosserien, bei dem auf ein Coil aus Metallblech beidseitig zwei Überzugsschichten aufgebracht und jeweils eingebrannt werden, aus dem Coil anschließend Blechteile ausgestanzt, im Tiefziehverfahren verformt und zu einer Automobilkarosserie zusammengefügt werden, **dadurch gekennzeichnet, daß** jeweils im Coil-Coating-Verfahren zur Herstellung der ersten Überzugsschicht ein Überzugsmittel (A) aufgebracht wird, das bezogen auf seine Festharzzusammensetzung 55 bis 80 Gew.-% eines oder mehrerer Polyesterpolyole, 2 bis 10 Gew.-% eines oder mehrerer aromatischer Epoxidharze sowie als Vernetzer 5 bis 15 Gew.-% Aminoplastharz und 10 bis 25 Gew.-% blockiertes Polyisocyanat enthält, zur Herstellung der zweiten Überzugsschicht ein Überzugsmittel (B) aufgebracht wird, das bezogen auf seine Festharzzusammensetzung 60 bis 80 Gew.-% eines oder mehrerer Polyesterpolyole sowie als Vernetzer 10 bis 20 Gew.-% Aminoplastharz und 10 bis 20 Gew.-% blockiertes Polyisocyanat enthält, wobei die Summe der Bestandteile der Überzugsmittel jeweils 100 Gew.-% ergibt, und die lackierten und verformten Blechteile durch Kleben und/oder Clinchen und/oder Schrauben zusammengefügt werden.

3. Verfahren nach Anspruch 1 oder 2, **dadurch gekennzeichnet, daß** die Polyesterpolyole des Überzugsmittels in (A) ein gewichtsmittleres Molekulargewicht M_{w} von 2000 bis 10000, eine Hydroxylzahl von 20 bis 50 mg KOH/g und eine Säurezahl unter 5 mg KOH/g aufweisen.

4. Verfahren nach einem oder mehreren der Ansprüche 1 bis 3, **dadurch gekennzeichnet, daß** die Polyesterpolyole des Überzugsmittels (B) ein gewichtsmittleres Molekulargewicht M_{w} von 5000 bis 25000, eine Hydroxylzahl von 20 bis 50 mg KOH/g und eine Säurezahl unter 5 mg KOH/g aufweisen.

## Claims

1. Method of producing automotive parts lacquered with two layers, in which two coating layers are applied to both sides of a coil of sheet metal and are each baked, and appropriate sheet-metal parts are then stamped from the coil and shaped by the deep-drawing process, **characterised in that** in the coil-coating process there are applied, in order to produce the first coating layer, a coating composition (A) that contains, based on its solid resin composition, from 55 to 80 wt.% of one or more polyester polyols, from 2 to 10 wt.% of one or more aromatic epoxy resins and, as crosslinker, from 5 to 15 wt.% of aminoplastic resin and from 10 to 25 wt.% of blocked polyisocyanate, and, in order to produce the second coating layer, a coating composition (B) that contains, based on its solid resin composition, from 60 to 80 wt.% of one or more polyester polyols and, as crosslinker, from 10 to 20 wt.% of aminoplastic resin and from 10 to 20 wt.% of blocked polyisocyanate, the sum of the constituents of the coating compositions in each case being 100 wt.%.

2. Method of producing lacquered automotive bodies, in which two coating layers are applied to both sides of a coil of sheet metal and are each baked, and sheet-metal parts are then stamped from the coil, shaped by the deep-drawing process and joined together to form an automotive body, **characterised in that** in the coil-coating process there are applied, in order to produce the first coating layer, a coating composition (A) that contains, based on its solid resin composition, from 55 to 80 wt.% of one or more polyester polyols, from 2 to 10 wt.% of one or more aromatic epoxy resins and, as crosslinker, from 5 to 15 wt.% of aminoplastic resin and from 10 to 25 wt.% of blocked polyisocyanate, and, in order to produce the second coating layer, a coating composition (B) that contains, based on its solid resin composition, from 60 to 80 wt.% of one or more polyester polyols and, as crosslinker, from 10 to 20 wt.% of aminoplastic resin and from 10 to 20 wt.% of blocked polyisocyanate, the sum of the constituents of the coating compositions in each case being 100 wt.%, and the lacquered and shaped sheet-metal parts being joined together by adhesive bonding and/or by clinching and/or by screwing.

3. Method according to claim 1 or 2, **characterised in that** the polyester polyols of the coating composition in (A) have a weight-average molecular weight M_{w} from 2000 to 10,000, a hydroxyl number from 20 to 50 mg KOH/g and an acid number below 5 mg KOH/g.

4. Method according to one or more of claims 1 to 3, **characterised in that** the polyester polyols of coating composition (B) have a weight-average molecular weight M_{w} from 5000 to 25,000, a hydroxyl number from 20 to 50 mg KOH/g and an acid number below 5 mg KOH/g.

## Revendications

1. Procédé de fabrication de pièces pour l'automobile laquées en deux couches de laquage dans lequel deux couches de revêtement sont appliquées sur les deux faces d'un feuillard de tôle métallique et respectivement cuites au four, les pièces de tôle appropriées étant ensuite découpées à la matrice et façonnées par emboutissage profond, **caractérisé en ce que** sont respectivement appliqués pendant le processus de laquage du feuillard, pour l'obtention de la première couche de revêtement, un agent de revêtement (A) contenant, par rapport à sa teneur en résine solide, 55 à 80 % en poids d'un ou plusieurs polyols de polyester, 2 à 10 % en poids d'une ou plusieurs résines époxydes aromatiques ainsi que, à titre de réticulant, 5 à 15 % en poids de résine aminoplaste et 10 à 25 % en poids de polyisocyanate bloqué, et pour l'obtention de la seconde couche de revêtement, un agent de revêtement (B) contenant, par rapport à sa teneur en résine solide, 60 à 80 % en poids d'un ou plusieurs polyols de polyester ainsi que, à titre de réticulant, 10 à 20 % en poids de résine aminoplaste et 10 à 20 % en poids de polyisocyanate bloqué, la somme des composants de l'agent de revêtement étant chaque fois égale à 100 % en poids.

2. Procédé de fabrication de carrosseries automobiles laquées dans lequel deux couches de revêtement sont appliquées sur les deux faces d'un feuillard de tôle métallique et respectivement cuites au four, des pièces de tôle étant ensuite découpées à la matrice à partir du feuillard, façonnées par emboutissage profond et assemblées pour former une carrosserie d'automobile, **caractérisé en ce que** sont respectivement appliqués pendant le processus de laquage du feuillard, pour l'obtention de la première couche de revêtement, un agent de revêtement (A) contenant, par rapport à sa teneur en résine solide, 55 à 80 % en poids d'un ou plusieurs polyols de polyester, 2 à 10 % en poids d'une ou plusieurs résines époxydes aromatiques ainsi que, à titre de réticulant, 5 à 15 % en poids de résine aminoplaste et 10 à 25 % en poids de polyisocyanate bloqué, et pour l'obtention de la seconde couche de revêtement, un agent de revêtement (B) contenant, par rapport à sa teneur en résine solide, 60 à 80 % en poids d'un ou plusieurs polyols de polyester ainsi que, à titre de réticulant, 10 à 20 % en poids de résine aminoplaste et 10 à 20 % en poids de polyisocyanate bloqué, la somme des composants de l'agent de revêtement étant chaque fois égale à 100 % en poids et **en ce que** les pièces de tôle peintes et façonnées sont assemblées par collage et/ou clinchage et/ou vissage.

3. Procédé selon la revendication 1 ou 2, **caractérisé en ce que** les polyols de polyester de l'agent de revêtement (A) présentent une masse moléculaire moyenne en poids Mw de 2000 à 10000, un indice d'hydroxyle de 20 à 50 mg KOH/g et un indice d'acidité inférieur à 5 mg KOH/g.

4. Procédé selon l'une quelconque des revendications 1 à 3, **caractérisé en ce que** les polyols de polyester de l'agent de revêtement (B) présentent une masse moléculaire moyenne en poids Mw de 5000 à 25000, un indice d'hydroxyle de 20 à 50 mg KOH/g et un indice d'acidité inférieur à 5 mg KOH/g.
